# EUROPÄISCHE PATENTSCHRIFT

(11) **EP 2 273 203 B1**
(45) Veröffentlichungstag und Bekanntmachung des Hinweises auf die Patenterteilung: **22.02.2017**
(21) Anmeldenummer: 10168561.8
(22) Anmeldetag: 06.07.2010
(51) Int. Cl.: F24D 12/02, F24D 3/08, F24D 17/02, F24H 9/00, F24D 3/18, F24D 17/00, F25B 30/02, F25B 41/04

(54) **Anlage zum Heizen und/oder Bereitstellen von Brauchwarmwasser**
Assembly for heating and/or providing hot service water
Installation de chauffage et/ou de préparation d'eau potable chaude

(30) Priorität: 07.07.2009 FR 0954693; 25.05.2010 FR 1054012
(43) Veröffentlichungstag der Anmeldung: 12.01.2011
(73) Patentinhaber: Robert Bosch GmbH, 70442 Stuttgart (DE)
(72) Erfinder: Gay, Alexandre, 78830, Bullion (FR); Bimont, Cyril, 60940, Angicourt (FR); Trela, Marc, 94300, Vincennes (FR)

(56) Entgegenhaltungen:
- WO-A1-85/02247
- FR-A1- 2 497 925
- FR-A1- 2 501 837
- US-A- 3 962 884

## Beschreibung

Die vorliegende Erfindung betrifft eine Heizanlage, die einen Heizkreis mit Radiatoren speist und/oder die Bereitstellung von Brauchwarmwasser aus einem Heizkessel gewährleistet.

Es gibt bereits Kombinationen von Heizkesseln und Wärmepumpen, die im Allgemeinen nach dem Prinzip der Wärmepumpe als Ablösung zum Heizkessel funktionieren.

Solche Wärmepumpen, die als Wärmequelle die Außenluft verwenden, funktionieren bis zu einer gewissen Temperatur der Außenluft, bei der die Funktion der Wärmepumpe wirtschaftlich vorteilhaft im Vergleich zur für die Funktion verbrauchten Stromleistung ist. Der Heizkessel funktioniert, wenn die Wärme, die die Wärmepumpe liefern kann, nicht ausreicht, oder wenn die Wärmepumpe ausgeschaltet ist.

Solche Anlagen bestehen im Allgemeinen aus einem Wärmepumpenteil (Verdampfer), der außen angebracht ist, und einem Teil (Kondensator), der im Inneren der Räume angebracht ist, vorzugsweise in der Nähe des Heizkessels, um das Anschließen an die Heizkreise zu erleichtern; die beiden Teile der Wärmepumpe sind durch einen Kühlfluidkreis verbunden.

Es gibt auch einstückige Wärmepumpen, die außerhalb der Räume angeordnet und direkt mit dem Heizkreis verbunden sind.

Da der von dem Luftstrom durchströmte Verdampfer, der die Wärme liefert, regelmäßig vereist, ist ein Enteisungssystem vorgesehen. Dieses System besteht darin, entweder die Funktion der Wärmepumpe umzukehren, um den Verdampfer zu erwärmen und zu enteisen, oder Wärme von einer äußeren Quelle, wie einem Heizwiderstand, zu liefern, die kurz zum Enteisen eingesetzt wird.

Aber diese Enteisung verbraucht Energie zum Nachteil der Gesamtleistung der Wärmepumpe.

Ganz allgemein erfordert die Installation der Wärmepumpe, die dazu bestimmt ist, einen Großteil der an den Heizkreis und/oder den Brauchwarmwasseraufbereitungskreis gelieferten Energie zu gewährleisten, um Leistungsanforderungen der Investition zu entsprechen, eine prioritäre Funktion der Wärmepumpe an der Grenze zu ihrer wirtschaftlichen Leistung.

WO 850 2247 beschreibt eine Heizanlage mit Wärmepumpe und Zusatzheizkessel der mit der Ausgangsluft der Wärmepumpe gespeist wird. Wenn die Außenluft zu kalt ist wird der Heizkessel eingeschaltet, dessen Rauch zur Aufwärmung der Eingangsluft benutzt wird. Der Rauch wird mit der Ausgangsluft gemischt vor in den Eingangswärmer eingeleitet zu werden. Diese Anlage hat einen komplizierten Aufbau und die Ausbeute ist niedrig.

Die vorliegende Erfindung hat zum Ziel, eine Heizanlage des vorher definierten Typs vorzuschlagen, die eine einfache Konstruktion und Installation hat, Platz sparend ist, und es ermöglicht, die wirtschaftlich vorteilhafte Funktion einer Luft-/Flüssig-Wärmepumpe zu nutzen, um Wärme als Ergänzung zu einem Heizkessel zu liefern, und die in den zu beheizenden Räumen installiert werden kann.

Die Erfindung soll auch die Energieleistung und Gesamtbilanz von Gaskesseln im Leistungsbereich von 3 bis 28 kW für die Nutzung im Haushalt verbessern und einen Heizkessel von geringeren Gesamtabmessungen entwickeln, der es ermöglicht, die bestehenden Kessel und insbesondere die Gaskessel wirksam zu ersetzen.

Zu diesem Zweck betrifft die Erfindung eine Heizanlage des oben definierten Typs, wobei die Heizanlage eine einzige Hülle umfasst, die mit mindestens einer eine Luftversorgung bildende Außenluftzuleitung und einer Rauchgas- und Abluftableitung des Heizkessels sowie mit Anschlussmitteln für den Heizwasserkreis, die Brennstoffversorgung des Heizkessels und den Stromanschluss versehen ist, umfasst:
A - einen Heizkessel, der mit einem Heizkreis verbindbar ist und kombiniert ist mit:
B - einer Wärmepumpe mit einem Kühlfluidkreis, umfassend einen Verdampfer, der mit Luft versorgt wird, und einen Kondensator, der mit dem Heizwasserkreis verbindbar ist, wobei sich ein Kompressor zwischen dem Verdampfer und dem Kondensator befindet, wobei dem Kompressor ein Druckregler vorgeschaltet ist, um den Druck des Kühlfluids auf einen Solldruck im Verdampfer zu regeln, der das Vereisen des Verdampfers verhindert.

Die Heizanlage ist dass die Luftversorgung des Heizkessels (10) einen Wärmetauscher (15) umfasst, der auf der Rauchgas- (14) und Abluftableitung des Heizkessels (10) installiert ist, durch den die Versorgungsluft (AA) des Heizkessels (10) strömt, und dass die Wärmepumpe (20) eine getrennte Luftversorgung (22a) umfasst.

Die Ausführung der Wärmepumpe, um mit einem im Allgemeinen höheren Druck als jenem, der das Vereisen des Verdampfers erzeugt, zu funktionieren, ermöglicht es, die Herstellung der Wärmepumpe und die Steuerung ihrer Funktion in Kombination mit jener des Heizkessels wesentlich zu vereinfachen. Diese Kombination ermöglicht eine ausgezeichnete Wiedergewinnung der vom Heizkessel freigesetzten Wärme, da die in den Rauchgasen enthaltene Wärme wieder gewonnen und in die Luft übertragen wird, die sowohl den Heizkessel als auch den Verdampfer der Wärmepumpe speist, dank des Wärmetauschers, der auf der Rauchgasleitung vorgesehen ist.

Die erfindungsgemäße Hybridheizanlage verbessert die Energieleistung und die Gesamtbilanz an CO₂ des Heizkessels, insbesondere des Gaskessels für den Haushaltsgebrauch im Beriech der Heizkessel mit kleiner und mittlerer Leistung. Dank seines geringen Platzbedarfs, der praktisch jenem eines Heizkessels einer Wohnung oder eines kleinen Häuschens gleichzusetzen ist, kann dieser kombinierte Heizkessel leicht einen bestehenden Kessel ersetzen, wobei er an Ort und Stelle desselben installiert wird.

Bei einer alternativen, nicht von dieser Erfindung umfassten Ausführungsform umfasst die Anlage eine Luftversorgung, die dem Heizkessel und der Wärmepumpe gemeinsam ist und einen Wärmetauscher umfasst, der auf der Rauchgasleitung des Heizkessels installiert ist, durch den die Luft zur Versorgung des Heizkessels und der Wärmpumpe strömt.

Die gemeinsame Luftversorgung erleichtert die Installation des Heizkessels, da eine einzige Öffnung für den Durchgang der Rauchgase und die Versorgung mit Luft als Sauerstoffträger und mit Luft, die den Verdampfer der Wärmepumpe speist, ausreicht.

Nach einem weiteren vorteilhaften Merkmal umfasst die Anlage einen Verteiler für die Versorgungsluft, um gesteuert den Kessel mit Luft als Sauerstoffträger und den Verdampfer der Wärmepumpe mit Mündung des Ausgangs nach außen zu versorgen.

Nach einer weiteren Ausführung ist der Luftanschluss des Heizkessels mit dem Luftausgang des Verdampfers verbunden.

Nach einem weiteren vorteilhaften Merkmal umfasst die Wärmepumpe einen Saugventilator am Ausgang des Verdampfers.

Der Saugventilator kann in Abhängigkeit von der Temperatur der Außenluft von einer Steuerschaltung der Anlage aus gesteuert werden, die die Wärmepumpe anhalten kann, wenn die Funktionsbedingungen nicht rentabel sind.

Nach einem weiteren vorteilhaften Merkmal umfasst der Heizkessel einen Pumpventilator, der die Heizeinheit speist.

Nach einem weiteren, nicht von dieser Erfindung umfassten, vorteilhaften Merkmal ist der Heizkessel in einer Hülle, durch die die Rauchgasleitung am Ausgang der Heizeinheit und einer Öffnung für den Durchgang von Luft als Sauerstoffträger verläuft, installiert, wobei diese Hülle in eine Hülle integriert ist, die die Wärmepumpe umgibt, und in die der Wärmetauscher am Eingang mündet, um den in dieser Hülle installierten Verdampfer und die Heizeinheit durch die Versorgungsöffnung der Hülle zu speisen.

Nach einem weiteren vorteilhaften Merkmal ist der Kondensator mit der Rückleitung des Warmwasserkreises durch ein Dreiwegeregelventil verbunden, das es ermöglicht, den Kühlkreis vor einer Rücklauftemperatur, die zu hoch sein kann, zu schützen, insbesondere wenn tiefer Winter herrscht, und wenn die geringe Leistung der Wärmepumpe ihre Funktion nicht anregt. Allerdings wenn die Wärmepumpe funktioniert, wird die gesamte Wassermenge vor dem Eingang in die Heizeinheit erwärmt, und nach einem weiteren vorteilhaften Merkmal ist der Warmwasseraufbereitungskreis an den Wasserkreis durch ein Dreiwegeventil angeschlossen.

Gemäß der Erfindung umfasst die Luftversorgung des Heizkesselns einen Wärmetauscher, der auf der Rauchgasleitung des Kessels installiert ist, durch den die Versorgungsluft des Heizkessels strömt, und umfasst die Wärmepumpe eine von jener des Kessels getrennte Luftversorgung.

Diese Anlage hat den Vorteil, dass sie erwärmte Luft als Sauerstoffträger liefert und die Abmessung der Leitungen, die außen zu sehen sind, verringert. Beispielsweise können so Leitungen mit Knicken und alle am Markt verfügbaren Standardausrüstungen verwendet werden, wodurch die Kosten der Anlage gesenkt und Kosten für Spezialteile vermieden werden.

Schließlich ist nach einem weiteren vorteilhaften Merkmal der Brauchwarmwasseraufbereitungskreis an den Wasserkreis durch ein Dreiwegeventil angeschlossen, und dieses Ventil ist insbesondere mit der Rückleitung des Heizkreises der Radiatoren und der Ausgangsleitung des Wärmetauschers des Warmwasseraufbereitungskreises verbunden, wobei die Eingangsleitung dieses Kreises mit der Hinleitung des Warmwasserkreises der Radiatoren am Ausgang der Heizeinheit verbunden ist.

Die vorliegende Erfindung ist nachstehend im Detail mit Hilfe einer Ausführungsart einer Heizanlage beschrieben, die in den beiliegenden Zeichnungen dargestellt ist, wobei:
- Figur 1: ein Schema einer erfindungsgemäßen Heizanlage ist,
- Figur 2: ein Schema einer Ausführungsvariante der Erfindung ist,
- Figur 3: ein Schema einer dritten Ausführungsart der erfindungsgemäßen Heizanlage ist,
- Figur 4: ein Schema einer vierten Ausführungsart der erfindungsgemäßen Heizanlage ist.

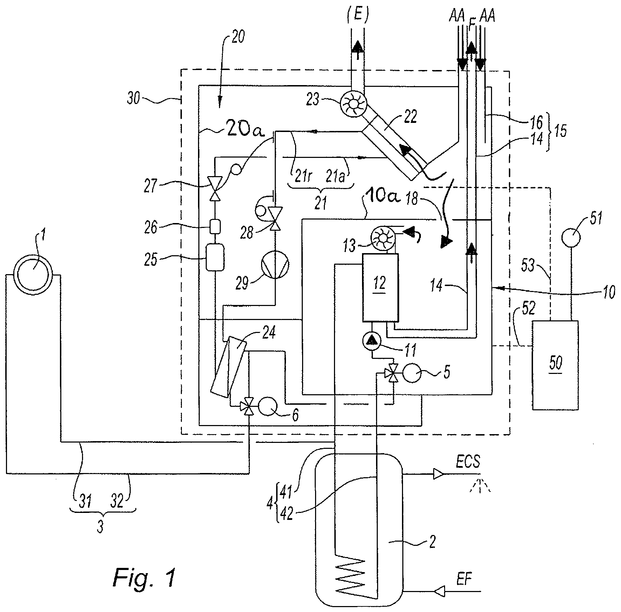

Gemäß Figur 1 betrifft die Erfindung eine Heizanlage, die einen Heizkreis mit Radiatoren (Bodenheizung oder dergleichen) 1 speist und/oder die Bereitstellung von Brauchwarmwasser aus einem Warmwasserballon 2 gewährleistet. Der Ausdruck "Warmwasserballon" stellt ganz allgemein jedes Wärmetauschsystem zwischen dem Heizkreis und einem Brauchwarmwasseraufbereitungsmittel ECS aus kaltem Wasser EF dar.

Die Anlage umfasst einen Heizkessel 10 in Kombination mit einer Wärmepumpe 20, die in eine selbe Hülle 30 integriert sind, die eine Außenverbindung (E) für die Luftversorgung des Kessels 10 und der Wärmepumpe 20 und die Ableitung der gekühlten Rauchgase, sowie für den Anschluss an den Warmwasserkreis 3 und/oder den Brauchwarmwasseraufbereitungskreis 4 ECS hat.

Der Heizkreis mit Radiatoren 1 ist mit dem Warmwasserkreis 3 mit einer Abzweigung zum Ballon 2 durch ein Dreiwegeventil 5 zur Regelung der Durchflussmengen von Kühlflüssigkeit in dem Heizkreis 3 und in dem Brauchwarmwasseraufbereitungskreis 4 verbunden, wobei beispielsweise der Brauchwarmwasseraufbereitung der Vorrang gegeben wird.

Der Wasserkreis 3 umfasst eine Hinleitung 31, die warm ist, und eine Rückleitung 32, die kalt ist. Dasselbe gilt für den Kreis 4, der in dem Ballon 2 verläuft und eine Hinleitung 41, die warm ist, und eine Rückleitung 42, die kalt ist, umfasst. Die Rückleitungen 32, 42 laufen im Bereich des Dreiwegeventils 5 zusammen. Es ist nämlich vorteilhaft, dieses Ventil 5 auf der kalten Rückleitung und nicht auf dem heißen Teil der Anlage zu installieren, d.h. am Anschlusspunkt der heißen Leitungen 31, 41.

Der Wasserkreis 3 ist mit einem Kessel 10 durch eine Umlaufpumpe 11 verbunden. Der Kessel 10 besteht ferner aus dem Dreiwegeventil 5 und der Umlaufpumpe 11, einer Heizeinheit 12 mit Verbrennung, beispielsweise mit Gas, die mit Außenluft als Sauerstoffträger durch einen Ventilator 13 am Eingang der Heizeinheit 12 gespeist wird. Die Rauchgase (F) werden durch eine Rauchgasleitung 14 abgeleitet, die einen Eingangswärmetauscher 15 für die Versorgungsluft (AA) bildet. Diese Versorgungsluft (AA) zirkuliert in einer zur Rauchgasleitung 14 konzentrischen Leitung 16.

Der Heizkessel 10 ist von einer Hülle 10a umgeben, die mit einer Lufteintrittsöffnung 18 versehen ist, die vom Eingangswärmetauscher 15 gespeist wird. Die Lufteintrittsöffnung 18 kann auch am Ausgang des Verdampfers 22 gespeist werden.

Die Wärmepumpe 20 in Kombination mit dem Heizkessel 10 besteht aus einem Kühlfluidkreis 21, der in einer Hülle 20a angeordnet ist, die zum Teil mit der Hülle 10a des Heizkessels 10 kombiniert ist. Der Kühlfluidkreis 21 umfasst einen Verdampfer 22, der in der Hülle 20a installiert ist und durch den ein aus dem Eingangswärmetauscher 15 austretender Luftstrom strömt. Der Ausgang der den Wärmetauscher 22 durchquerenden Luftleitung umfasst einen Absaugventilator 23, der nach außen (E) mündet. Der Ventilator 23 sichert die Zirkulation des Luftstroms im Verdampfer 22 mit einem Luftausgang 23, der außerhalb (E) der Hülle 30 mündet.

Stromaufwärts zum Verdampfer 22 umfasst der Teil 21 a des Kreises 21 einen Kondensator 24, der die Wärme des Kühlfluids mit dem Wasserkreis 3 austauscht. Durch den Kondensator 24 strömt das kalte Kühlfluid der Leitung 32. Am Ausgang ist der Kondensator 24 mit der Leitung 32 verbunden, die an das Ventil 5 und die Pumpe 11 anschließt.

Das Ventil 6 ermöglicht es, den Kühlkreis vor einer zu hohen Temperatur zu schützen, insbesondere im tiefsten Winter und wenn die Leistung der Wärmepumpe zu gering sein sollte. Umgekehrt, wenn die Wärmepumpe in Betrieb ist, wird die gesamte Rücklaufwassermenge in dem Kondensator vorgewärmt.

Der Kondensator 24 ist mit dem Verdampfer 22 durch einen Akkumulator 25 verbunden, der einen Pufferbehälter für Kühlfluid darstellt und seine Entwässerung gewährleistet. Auf den Akkumulator 25 folgt ein Sichtfenster 26, das es ermöglicht, den Stand des Fluids in der Hinleitung 21a zu erkennen, der Kreis 21 und ein Druckminderer 27. Der Verdampfer 22 ist mit einem Kompressor 29 mit Hilfe eines Druckreglers 28 verbunden, der den Druck auf einen Sollwert einstellt, der derart gewählt ist, dass das Vereisen des Verdampfers 22 vermieden wird, auf Kosten einer Verringerung der Leistung der Wärmepumpe 20, wenn die Gefahr des Vereisens auftritt.

In dem oben beschriebenen Ausführungsbeispiel wird die Versorgung mit Luft als Sauerstoffträger durch den Ventilator 13 geregelt, und der Luftdurchgang in der Wärmepumpe wird durch den Ventilator 23 sichergestellt.

Nach einer nicht dargestellten Ausführungsvariante sichert ein einziger Ventilator die Luftversorgung. Dieser Ventilator saugt die Luft am Ausgang des Wärmetauschers 15 an, und die Verteilung zwischen der Luft als Sauerstoffträger und der an den Verdampfer 22 gelieferten Luft wird durch Schieberegister oder Klappen geregelt.

Diese in ihrer Struktur einfachere Variante ist weniger flexibel in der Funktion als die Verwendung von zwei Ventilatoren, deren Funktion einfacher zu steuern ist.

Die Heizanlage ist mit einem Steuerkreis 50 versehen, der mit Fühlern 51, wie beispielsweise Temperaturfühlern für das Wasser, die Außenluft, das Brauchwarmwasser und sonstigen verbunden, um die Funktion der Hybridanlage, d.h. die kombinierte Funktion des Heizkessels 10 und der Wärmepumpe 20, zu steuern. Der Steuerkreis 50 ist schematisch mit dem Heizkessel über eine Steuerleitung 52 und mit der Wärmepumpe 20 über eine Steuerleitung 53 verbunden, ohne dass die Anschlüsse im Detail angeführt sind.

Der Steuerkreis 50 umfasst auch die Mittel zur Regelung der Solltemperaturen des Wassers des Heizkreises 3 und des Brauchwarmwasseraufbereitungskreises 4.

Die Anlage ist, wie bereits angeführt, in ihre Hülle 30 integriert, um einen Block wie einen herkömmlichen Heizkessel zu bilden, der alle Elemente umfasst und seine Montage und Anbringung leicht macht und insbesondere einen bestehenden Heizkessel ersetzt.

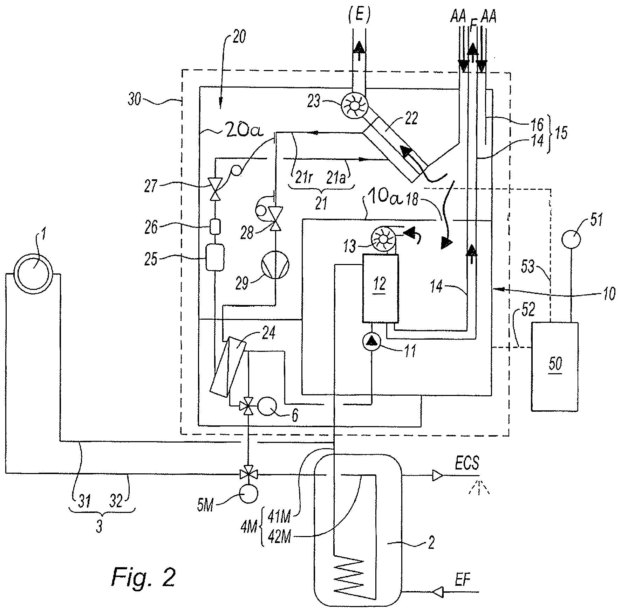

Figur 2 zeigt eine Ausführungsvariante einer erfindungsgemäßen Anlage. Bei dieser Variante werden dieselben Bezugszeichen wie oben verwendet, um identische Elemente oder Elemente mit analoger Funktion zu bezeichnen.

Die bei dieser Variante veränderten Elemente besitzen identische Bezugszeichen wie die vorhergehenden, allerdings durch das Suffix M ergänzt, und die Beschreibung ist auf die Beschreibung der Unterschiede begrenzt.

Das Dreiwegeventil 5M ist in dem Kreis 3 stromaufwärts zum Dreiwegeventil 6 installiert, so dass der Ausgang des Heizkessels 12 mit der Hinleitung 31 des Warmwasserkreises 3, der durch die Radiatoren verläuft, und mit der Leitung 41 M, die in den Warmwasserballon 2 eintritt, verbunden ist. Die Rückleitung 32 des Warmwasserkreises 3, die durch die Radiatoren verläuft, und die Ausgangsleitung 42M des Heizkreises des Ballons 2 laufen in dem Dreiwegeventil 5M zusammen. Die anderen Elemente der Anlage sind mit jenen der ersten Ausführungsart identisch.

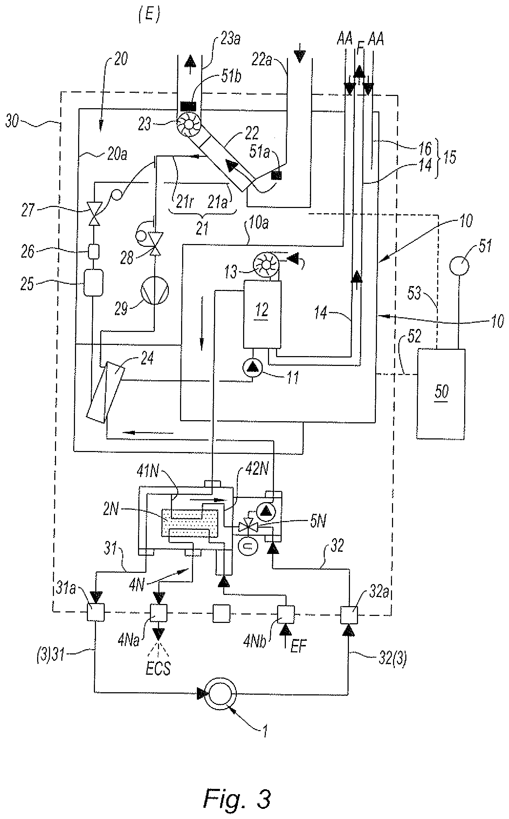

Figur 3 zeigt eine dritte Ausführungsart der Erfindung. Für die Beschreibung dieser Variante werden dieselben Bezugszeichen wie oben verwendet, um dieselben Elemente oder Elemente mit derselben Funktion zu bezeichnen.

Diese dritte Ausführungsart unterscheidet sich von der ersten Ausführungsart dadurch, dass die Luftversorgung AA des Heizkessels 12 durch den Wärmetauscher 15 durch Gegenstrom zwischen der Rauchgasleitung 14 und der Luftversorgungsleitung 16 erfolgt. Diese Versorgung des Heizkessels ist dem Heizkessel eigen. Der Verdampfer 22 hat eine getrennte Versorgung 22a, die direkt von außen (E) erfolgt, und die abgesaugte Luft wird direkt nach außen (E) durch einen Luftaustritt 23a abgeleitet.

Diese Ausführungsart unterscheidet sich auch von jener der Figuren 1 und 2 dadurch, dass der Brauchwarmwasseraufbereitungskreis 4N keinen Ballon, sondern einen Plattentauscher 2N umfasst, um direkt das Brauchwarmwasser zu liefern. Die Montage dieses Plattentauschers 2N ist analog zu jener der zweiten Ausführungsart der Figur 2. Der Brauchwarmwasseraufbereitungskreis 4N, d.h. hauptsächlich der Plattentauscher 2N, ist am Eingang 41 N mit der Hinleitung des Heizkreises, d.h. der aus dem Kessel 12 austretenden Leitung 31, verbunden. Der Ausgang 42N des Plattenwärmetauschers 2N ist mit einem Dreiwegehahn 5N verbunden, dessen anderer Eingang mit der Rückleitung 32 des Heizkreises 3 verbunden ist, so dass die beiden Ströme verbunden werden, um in den Kondensator 24 der Wärmepumpe zu strömen und am Ausgang derselben zum Heizkessel 12 zurückzukehren.

Die Zirkulationsrichtung der Fluide ist durch Pfeile, wie in den vorhergehenden Figuren, angezeigt.

Der Heizwasserkreis 3 und der Brauchwarmwasserkreis 4N sowie die Kaltwasserzuleitung EF sind mit Anschlüssen 31 Na, 32Na, 4Na, 4Nb verbunden, die schematisch durch Rechtecke dargestellt sind. Der Brauchwarmwasserausgang 4Na ist mit einem Brauchwarmwasserpunkt ECS, wie einem Waschbecken, einer Dusche oder einer Badewanne, verbunden, und sein Eingang 4Nb ist mit der Kaltwasserzuleitung EF verbunden.

Die Anlage umfasst auch verschiedene Fühler 51 a, 51 b am Eingang und am Ausgang des Verdampfers 22 zusätzlich zu den Fühlern 51, die bereits für die Anlagen der Figuren 1 und 2 beschrieben wurden. Diese Fühler ermöglichen es, die Funktion der Anlage zu steuern.

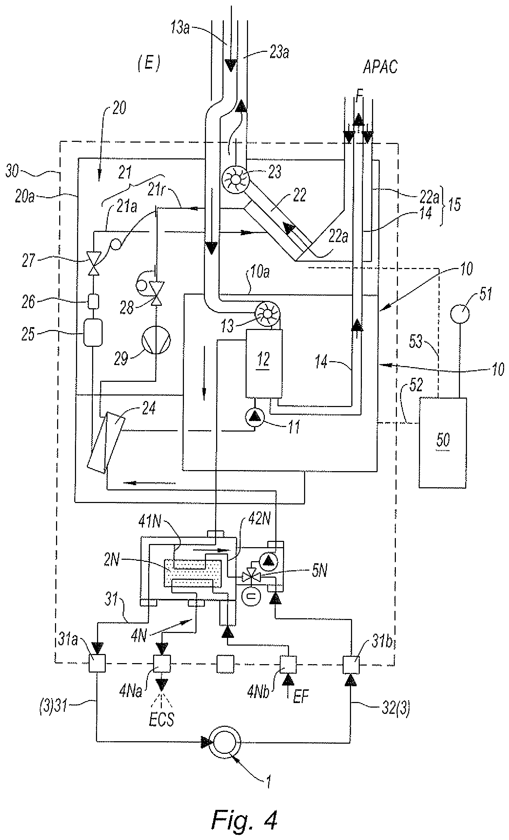

Figur 4 zeigt eine vierte Ausführungsvariante der Erfindung. Diese Variante ist ähnlich der Variante der Figur 3 mit Ausnahme der Behandlung der Versorgungsluft des Heizkessels 10 und der Wärmepumpe 20 sowie der Behandlung der Rauchgase und der abgesaugten Luft.

Die in der Beschreibung dieser Ausführungsart verwendeten Bezugszeichen sind dieselben wie bei den oben beschriebenen Ausführungsarten für die mit diesen identischen Elementen. Ihre Beschreibung wird nicht wiederholt.

Bei dieser vierten Ausführungsart sind die Ausgangs- und Eingangsströme des Heizkessels 10 und der Wärmepumpe 20 gekreuzt. Die Rauchgasleitung 14 des Heizkessels 12 verläuft durch einen Wärmetauscher 15, dessen konzentrische Leitung 16 die Leitung 22a ist, die den Verdampfer 22 der Wärmepumpe 20 mit der Versorgungsluft APAC speist. Der Ausgang 23a des Verdampfers 22 wird nach außen (E) durch eine doppelte Leitung abgeleitet, deren anderer Teil die Luftversorgungsleitung 13a des Heizkessels 10 ist, um auch hier einen Wärmetauscher mit Gegenstrom zu bilden.

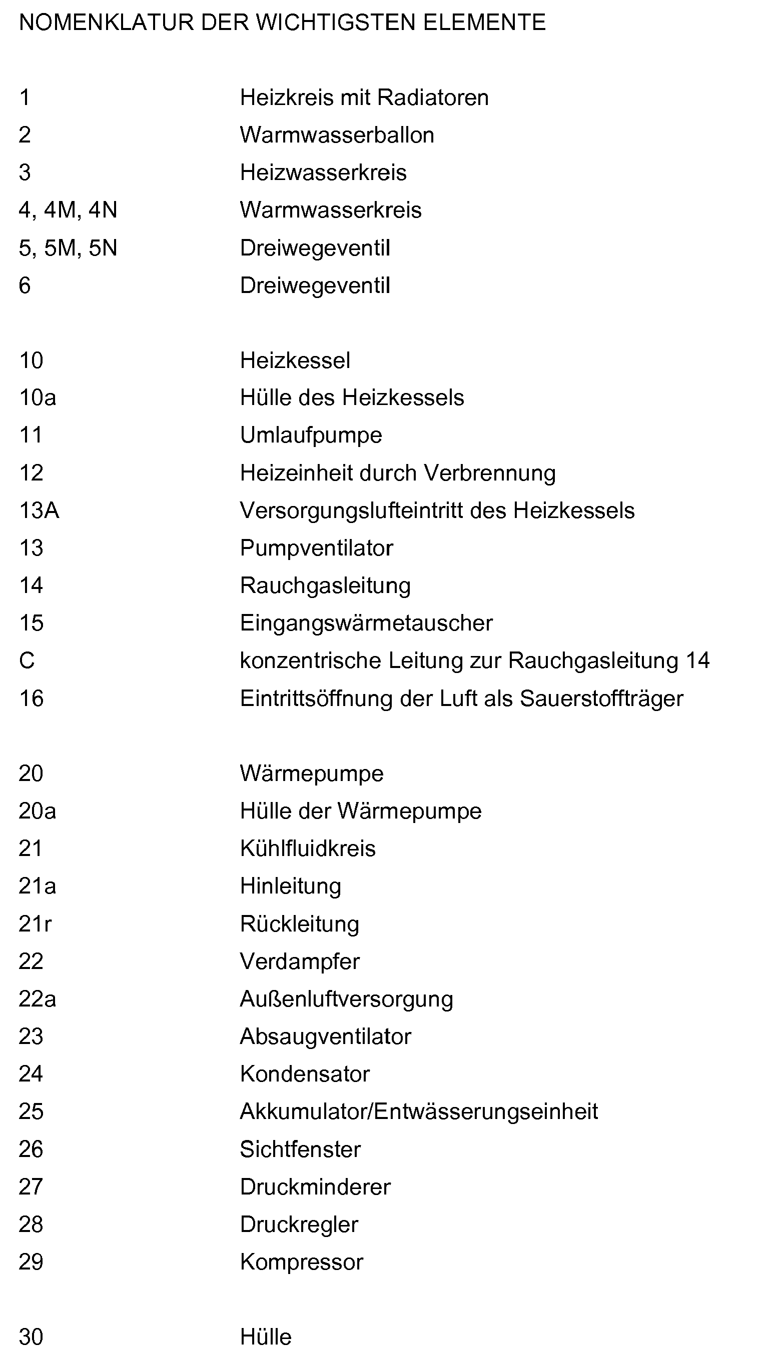

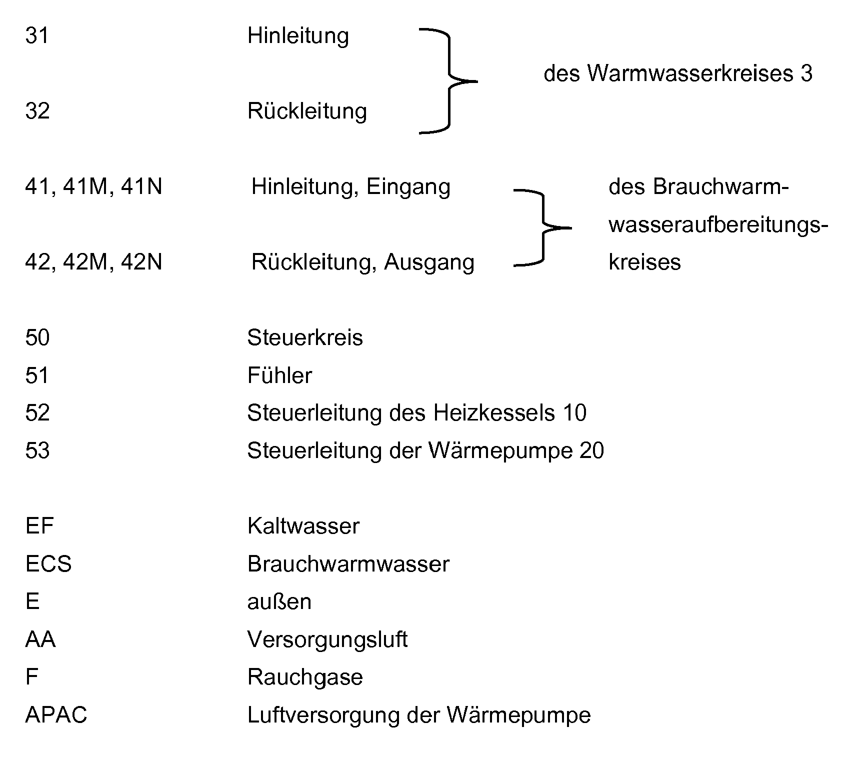

## Patentansprüche

1. Heizanlage für einen Heizkreis (3) mit Radiatoren und/oder für die Bereitstellung von Brauchwarmwasser aus einem Heizkessel (10),
wobei die Heizanlage eine einzige Hülle (30) umfasst, die mit mindestens einer eine Luftversorgung bildende Außenluftzuleitung (16) und einer Rauchgas- (14) und Abluftableitung des Heizkessels sowie mit Anschlussmitteln für den Heizwasserkreis (3), die Brennstoffversorgung des Heizkessels und den Strom versehen ist, die Hülle enthält:
A- einen Heizkessel (10), der mit einem Heizkreis (1, 3) verbindbar ist und kombiniert ist mit:
B- einer Wärmepumpe (20) mit einem Kühlfluidkreis (21), umfassend einen Verdampfer (22), der mit Luft versorgt wird, und einen Kondensator (24), mit einem Kompressor (29) zwischen dem Verdampfer (22) und dem Kondensator (24), **dadurch gekennzeichnet, dass** der Kondensator (24) mit dem Heizwasserkreis (3) stromaufwärts zum Heizkessel (10) verbindbar ist, und dem Kompressor (29) ein Druckregler (28) vorgeschaltet ist, um den Druck des Kühlfluids auf einen Sollwert im Verdampfer (22) zu regeln, der das Vereisen des Verdampfers verhindert, wobei die Luftversorgung des Heizkessels (10) einen Wärmetauscher (15) umfasst, der auf der Rauchgas- (14) und Abluftableitung des Heizkessels (10) installiert ist, durch den die Versorgungsluft (AA) des Heizkessels (10) strömt, und dass die Wärmepumpe (20) eine getrennte Luftversorgung (22a) umfasst.

2. Heizanlage nach Anspruch 1,
**dadurch gekennzeichnet, dass**
sie einen Versorgungsluftverteiler (13, 18, 23) am Ausgang des Eingangswärmetauschers (15) umfasst, um auf gesteuerte Weise den Heizkessel (10) mit Luft als Sauerstoffträger und den Verdampfer (22) der Wärmepumpe (20) mit Ausgang (23) nach außen (E) zu versorgen.

3. Heizanlage nach Anspruch 1,
**dadurch gekennzeichnet, dass**
die Zuleitung von Luft als Sauerstoffträger des Heizkessels (10) mit dem Luftaustritt des Verdampfers (22) verbunden ist.

4. Heizanlage nach Anspruch 1,
**dadurch gekennzeichnet, dass**
die Wärmepumpe (20) einen Absaugventilator (23) am Ausgang des Verdampfers (22) umfasst.

5. Heizanlage nach Anspruch 1,
**dadurch gekennzeichnet, dass**
der Heizkessel (10) eine Heizeinheit (12) umfasst und der Heizkessel (10) einen Pumpventilator (13) umfasst, der die Heizeinheit (12) speist.

6. Heizanlage nach Anspruch 1,
**dadurch gekennzeichnet, dass**
der Kondensator (24) mit der Rückleitung (32) des Heizwasserkreises (3) durch ein Dreiwegeregelventil (6) verbunden ist, das die Einstellung der Heizleistung der Wärmepumpe in dem möglichen Fall einer zu heißen Heizrückleitung ermöglicht.

7. Heizanlage nach Anspruch 1,
**dadurch gekennzeichnet, dass**
der Heizkessel (10) eine Heizeinheit (12) umfasst, und der Brauchwarmwasseraufbereitungskreis (4) an den Wasserkreis durch ein Dreiwegeventil (5M) angeschlossen ist, und dass dieses Ventil (5M) insbesondere mit der Rückleitung (32) des Heizkreises der Radiatoren (1) und der Ausgangsleitung (42M) des Warmwasserballons (2) verbunden ist, wobei die Eingangsleitung (41 M) des Brauchwarmwasseraufbereitungskreises mit der Hinleitung (31) des Warmwasserkreises der Radiatoren am Ausgang der Heizeinheit (12) verbunden ist.

8. Heizanlage nach Anspruch 1,
**dadurch gekennzeichnet, dass**
der Heizkessel (10) eine Heizeinheit (12) umfasst, und der Brauchwarmwasseraufbereitungskreis (4N) an den Warmwasserkreis (3) durch ein Dreiwegeventil (5N) angeschlossen ist, das insbesondere mit der Rückleitung (32) des Heizkreises (3) der Radiatoren und der Ausgangsleitung (42N) des Wärmetauschers (2N) des Warmwasseraufbereitungskreises verbunden ist, wobei die Eingangsleitung (41 N) dieses Kreises (2N) mit der Hinleitung (31) des Warmwasserkreises (3) der Radiatoren am Ausgang der Heizeinheit (12) verbunden ist.

## Claims

1. Heating system for a heating circuit (3) having radiators and/or for providing hot service water from a heating boiler (10),
the heating system comprising a single casing (30), which is provided with at least one external air feed duct (16) forming an air supply and a flue-gas (14) and waste air discharge duct of the heating boiler and with connecting means for the hot water circuit (3), the fuel supply of the heating boiler and the power, the casing containing:
A- a heating boiler (10), which can be connected to a heating circuit (1, 3) and is combined with:
B- a heat pump (20) having a cooling fluid circuit (21), comprising an evaporator (22) which is supplied with air, and a condenser (24), with a compressor (29) between the evaporator (22) and the condenser (24),
**characterized in that**
the condenser (24) can be connected to the hot water circuit (3) upstream of the heating boiler (10), and
a pressure regulator (28) is connected upstream of the compressor (29), in order to control the pressure of the cooling fluid to a set point in the evaporator (22) which prevents icing of the evaporator,
wherein the air supply of the heating boiler (10) comprises a heat exchanger (15), which is installed on the flue-gas (14) and waste air discharge duct of the heating boiler (10), through which the supply air (AA) of the heating boiler (10) flows, and **in that** the heat pump (20) comprises a separate air supply (22a).

2. Heating system according to Claim 1,
**characterized in that**
it comprises a supply air distributor (13, 18, 23) on the outlet of the input heat exchanger (15), in order to supply the heating boiler (10) in a controlled manner with air as oxygen carrier and the evaporator (22) of the heat pump (20) with an outlet (23) to the outside (E).

3. Heating system according to Claim 1,
**characterized in that**
the feed duct of air as oxygen carrier of the heating boiler (10) is connected to the air outlet of the evaporator (22).

4. Heating system according to Claim 1,
**characterized in that**
the heat pump (20) comprises an extractor fan (23) on the outlet from the evaporator (22).

5. Heating system according to Claim 1,
**characterized in that**
the heating boiler (10) comprises a heating unit (12), and the heating boiler (10) comprises a pump fan (13), which feeds the heating unit (12).

6. Heating system according to Claim 1,
**characterized in that**
the condenser (24) is connected to the return line (32) of the hot water circuit (3) by a three-way control valve (6), which permits the adjustment of the heating output from the heat pump in the possible event of an excessively hot heating return line.

7. Heating system according to Claim 1,
**characterized in that**
the heating boiler (10) comprises a heating unit (12), and the hot service water preparation circuit (4) is connected to the water circuit by a three-way valve (5M), and **in that** this valve (5M) is in particular connected to the return line (32) of the heating circuit of the radiators (1) and the output line (42M) of the hot water cylinder (2), wherein the input line (41M) of the hot service water preparation circuit is connected to the flow line (31) of the hot water circuit of the radiators, at the outlet from the heating unit (12).

8. Heating system according to Claim 1,
**characterized in that**
the heating boiler (10) comprises a heating unit (12), and the hot service water preparation circuit (4N) is connected to the hot water circuit (3) by a three-way valve (5N), which is in particular connected to the return line (32) of the heating circuit (3) of the radiators and the output line (42N) of the heat exchanger (2N) of the hot water preparation circuit, wherein the input line (41N) of this circuit (2N) is connected to the flow line (31) of the hot water circuit (3) of the radiators, at the outlet from the heating unit (12).

## Revendications

1. Installation de chauffage pour un circuit de chauffage (3) avec des radiateurs et/ou pour la mise à disposition d'eau potable chaude à partir d'une chaudière (10) ;
l'installation de chauffage comprenant une enveloppe (30) unique pourvue d'au moins une conduite d'amenée d'air extérieur (16) formant une alimentation en air et une évacuation de gaz de fumée (14) et d'air sortant de la chaudière ainsi que des moyens de raccordement pour le circuit d'eau de chauffage (3) contenant l'alimentation en combustible de la chaudière et le courant, l'enveloppe contenant :
A- une chaudière (10) pouvant être reliée et étant combinée à un circuit de chauffage (1, 3) avec :
B- une pompe à chaleur (20) avec un circuit de fluide de refroidissement (21), comprenant un évaporateur (22) alimenté en air et un condensateur (24), avec un compresseur (29) entre l'évaporateur (22) et le condensateur (24), **caractérisée en ce que** le condensateur (24) peut être relié au circuit d'eau de chauffage (3) vers l'amont par rapport à la chaudière (10) et qu'un régulateur de pression (28) est connecté en amont du compresseur (29), pour régler la pression du fluide de refroidissement à une valeur théorique dans l'évaporateur (22), cette valeur empêchant le gel de l'évaporateur ;
l'alimentation en air de la chaudière (10) comprenant un échangeur thermique (15) installé sur l'évacuation de gaz de fumée (14) et d'air sortant de la chaudière (10), à travers lequel l'air d'alimentation (AA) de la chaudière (10) s'écoule et que la pompe à chaleur (20) comprend une alimentation en air (22a) séparée.

2. Installation de chauffage selon la revendication 1, **caractérisée en ce qu'**elle comporte un répartiteur d'air d'alimentation (13, 18, 23) au niveau de la sortie de l'échangeur thermique d'entrée (15) pour alimenter de façon commandée la chaudière (10) en air servant d'apport d'oxygène et l'évaporateur (22) de la pompe à chaleur (20) avec la sortie (23) vers l'extérieur (E).

3. Installation de chauffage selon la revendication 1, **caractérisée en ce que** la conduite d'amenée d'air servant d'apport d'oxygène de la chaudière (10) est reliée à la sortie d'air de l'évaporateur (22).

4. Installation de chauffage selon la revendication 1, **caractérisée en ce que** la pompe à chaleur (20) comprend un ventilateur de refoulement (23) au niveau de la sortie de l'évaporateur (22).

5. Installation de chauffage selon la revendication 1, **caractérisée en ce que** la chaudière (10) comprend une unité de chauffage (12) et que la chaudière (10) comprend un ventilateur de pompe (13) alimentant l'unité de chauffage (12).

6. Installation de chauffage selon la revendication 1, **caractérisée en ce que** le condensateur (24) est relié à la conduite de retour (32) du circuit d'eau de chauffage (3) par un clapet de régulation à trois voies (6) permettant le réglage de la puissance de chauffe de la pompe à chaleur dans le cas possible d'une conduite de retour de chauffage trop chaude.

7. Installation de chauffage selon la revendication 1, **caractérisée en ce que** la chaudière (10) comprend une unité de chauffage (12) et que le circuit de préparation d'eau potable chaude (4) est raccordé au circuit d'eau par un clapet à trois voies (5M) et que ce clapet (5M) est notamment relié à la conduite de retour (32) du circuit de chauffage des radiateurs (1) et à la conduite de sortie (42M) du ballon d'eau chaude (2), la conduite d'entrée (41M) du circuit de préparation d'eau potable chaude étant reliée à la conduite d'amenée (31) du circuit d'eau chaude des radiateurs au niveau de la sortie de l'unité de chauffage (12).

8. Installation de chauffage selon la revendication 1, **caractérisée en ce que** la chaudière (10) comprend une unité de chauffage (12) et que le circuit de préparation d'eau potable chaude (4N) est raccordé au circuit d'eau chaude (3) par un clapet à trois voies (5N) relié notamment à la conduite de retour (32) du circuit de chauffage (3) des radiateurs et à la conduite de sortie (42N) de l'échangeur thermique (2N) du circuit de préparation d'eau chaude, la conduite d'entrée (41N) de ce cercle (2N) étant reliée à la conduite d'amenée (31) du circuit d'eau chaude (3) des radiateurs au niveau de la sortie de l'unité de chauffage (12).
